Europäisches Patentamt

European Patent Office

Office européen des brevets

(11) Publication number: **0 413 183 A1**

# EUROPEAN PATENT APPLICATION

(21) Application number: 90114527.6

(22) Date of filing: 28.07.90

(51) Int. Cl.⁵: **H02K 1/27**

(30) Priority: 11.08.89 IT 2150189

(43) Date of publication of application:
20.02.91 Bulletin 91/08

(84) Designated Contracting States:
**DE FR GB**

(71) Applicant: **Venturini, Marco**
**Via S. Scorza, 15/21**
I-16136 Genova(IT)

(72) Inventor: **Venturini, Marco**
**Via S. Scorza, 15/21**
I-16136 Genova(IT)

(74) Representative: **Monti, Umberto**
**Via Washington 48**
I-20146 Milano(IT)

(54) **A method and a structure for assembling and mechanically blocking permanent magnets in brushless synchronous motors and the like.**

(57) A rotor structure and a method for assembling the same that makes it possible to employ permanent magnets of the sintered type, having low mechanical properties, high brittleness, size that is not precisely controlled, for use within brushless synchronous electric motors, in a reversible manner, without requiring glueing, resin impregnation, taping or machining of the magnets as it necessary in the conventional technique. The proposed method further allows for using already magnetized magnets without additional complications.

Fig. 2

# A METHOD AND A STRUCTURE FOR ASSEMBLING AND MECHANICALLY BLOCKING PERMANENT MAGNETS IN BRUSHLESS SYNCHRONOUS MOTORS AND THE LIKE

The present invention relates to a kind of rotor structure and to a method for assembling the same, that can be used mainly, but not exclusively, in the manufacturing of permanent magnets synchronous servomotors that are better known as brushless motors. Such electric motors comprise a conventional multiphase winding stator and a rotor carrying a plurality of permanent magnets, generally of the "rare earths" sintered type, such as magnets based on samarium and cobalt compounds, or those based on iron, neodymium and boron. According to the most used practice that achieves the best dynamic performances, the magnets having a small thickness are positioned over the rotor surface facing the air gap. The applications of this class of motors are growing due to their outstanding features of high torque, power as well as short response times. Their widespread use is nevertheless hindered by their high cost of manufacturing.

More particularly, a considerable portion of their manufacturing cost comes from the difficulty of realizing a rotor structure which is strong, reliable and easily reproduced using the magnets of the above mentioned type. The particular nature of the magnets brings about the following drawbacks:

1) the sintered magnets are brittle and subjected to cracks and microfractures;

2) they are built with rather large tolerance, similar to that of grade 5 of the ISO scale;

3) no tool machining of the magnets is possible, but for diamond wheel and very low speed, and the powders from the machining are flammable;

4) after being magnetized, the forces acting between the elementary magnets are quite relevant and make the assembly very difficult: the forces acting over magnets of the size of 1 g are so large that thr magnets can be broken upon contacting, and for the same reason their handling is dangerous;

5) on the other hand, there is required a high power to magnetize the rotors already carrying the assembled magnets, as well as magnetizing coils that are rather complex and costly for each size of the rotor.

According to the prior techniques, the assembly of the rotors of permanent magnets synchronous motors can be accomplished by means of the following technologies:

1) by glueing the non magnetized magnets over the rotor lamination stack, filling the gaps between the magnets, polimerizing the glue and the filling resin within an oven, grinding the outer surface, taping the outer surface by means of a glass or carbon fiber tape impregnated with resin, polymerizing and grinding of the outer surface, followed by a final magnetization with dedicated equipments;

2) according to a modification of the above technique, a large number of small size magnets are employed so as to form a mosaic that does not require any filling or external machining; the advantages thereof are compensated by the complexity of assembling a large number of magnets, and by the larger air gap required to accomodate a taped surface that is not perfectely round, which result in lower performances and/or the use of a larger amount of magnets;

3) as an alternative, segments of the rotor can be built that have a limited axial lenght (typically 1/3 of the diameter); the magnets are glued over such segments and are filled and machined as in the technique 1); the tape is replaced by two thin metal cups of non ferromagnetic stainless steel having a diameter slightly smaller than the final diameter of the rotor;

4) as a further alternative, it is possible to build rotors according to the above technique 1), and replace the tape with a thin tube of a-non ferromagnetic stainless steel or carbon fiber having a diameter slightly smaller than the final rotor diameter, which is shrink-fitted or forced to ensure a proper compression load of the underlaying magnets.

In all the above discussed techniques, it is evident that the use of already magnetized magnets, that are available at the manufacturer without any additional costs, and would therefore be desirable from the ecomonic point of view, is quite difficult to be obtained since the magnetic forces among the magnets would render troublesome their glueing togheter.

It is therefore an object of the present invention that of realizing a rotor structure wherein the magnets can be firmly assembled, requiring neither glue nor filling resins, nor thermal cycles of polimerization; it is further an object of the present invention that of providing a method for assembling such rotor structure that does not require a machining of the magnets surfaces; finally, it is an object of the present invention that of realizing a rotor structure wherein the magnets can be assembled after being magnetized, without any particular equipments or devices.

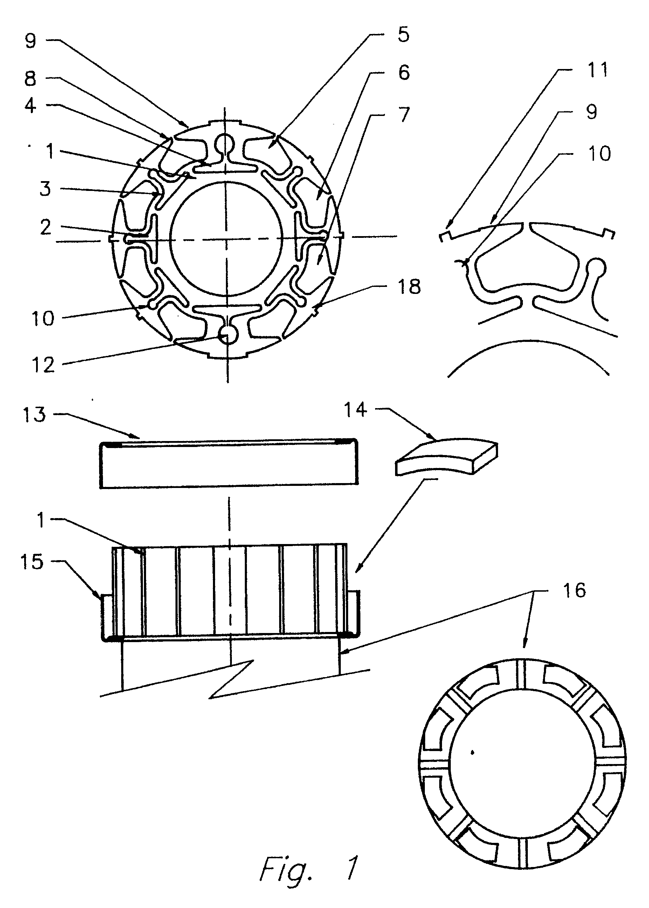

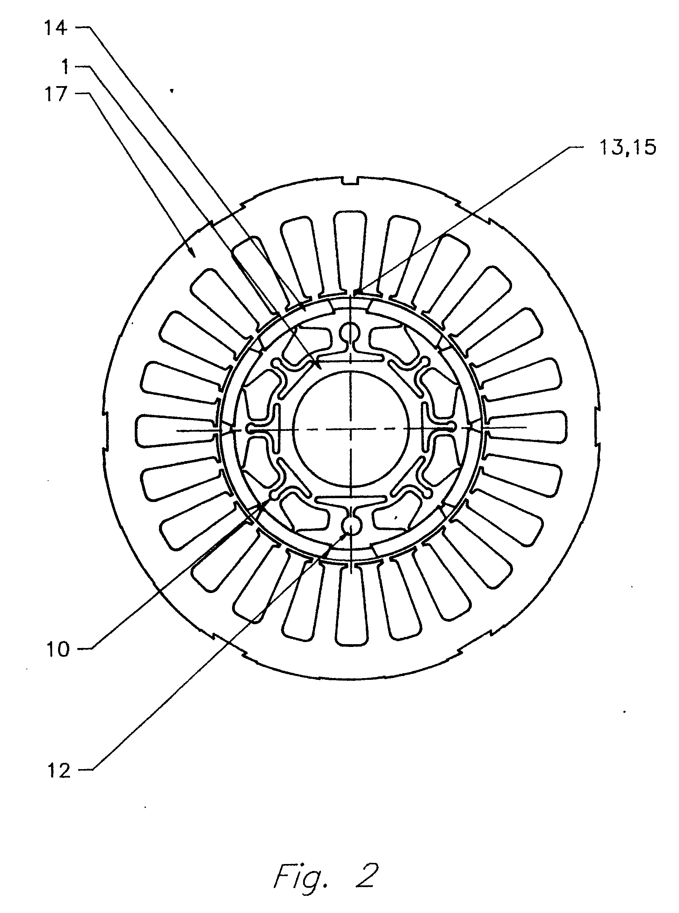

The invention is now disclosed with reference to a non limiting embodiment shown in Fig. 1 that illustrates the components of the rotor of the invention, and in Fig. 2 that shows the magnet circuit of a permanent magnets synchronous motor according to the invention which comprises eight poles in the illustrated embodiment.

The magnet circuit of the motor (Fig. 2) shows a conventional multiphase stator 17 coupled to a rotor carrying the permanent magnets 14, their number being generally equal to an integer multiple of the motor poles. The magnetic circuit is closed by the rotor yokes. Such yokes have a maximum thickness between a pole and the next one; at the middle of poles the magnetic flux is null, and therefore the rotor yoke is interrupted by a slit 8 without prejudice of the motor characteristics.

According to the present invention, the rotor (Fig. 2) is made up by segments having an axial lenght reduced with respect to the diameter, typically equal to 1/3 of the diameter. Motors of different power can be realized by assembling a suitable number of rotor segments aligned along the same axis.

The supporting frame of the rotor segments comprises a core laminations obtained through punching simultaneously with the punching of the stator laminations. Each lamination of the core comprises individual magnetic yokes for each magnet, separated from each other at the center of every pole by a cut 8; a ring of shaped slots 2, 3 for providing elasticity, and adjacent control recesses 5, 6, 7. The resting surfaces of the magnets 9 are separated from each other by a locating step 11 allowing for an accurate positioning of the magnets over the structure. Such laninations core is characterized by an appreciable radial elasticity which is independent for each magnet. The rotor segment is completed by an assembly of permanent magnets 14, built in accordance with commercial tolerances, typically in the order of 100 micron, and by two cups 13, 15 of a-magnetic material (e.g. a drawn stainless steel) having a limited thickness, typically of 0.3 to 0.6 mm, an outer diameter equal to the final diameter, and an inner diameter such as to ensure a certain interference of the laminations-magnets assembly.

The assembly method according to the present invention is carried out through a clamp mounting tool 16 having a crown of prongs adapted to penetrate the control recesses 5, 6, 7 and the subsequent ones, and to be inwardly contracted upon command so as to push inwardly the mounting surfaces of the magnets 9.

In order to assemble the rotor of the present invention, one of the non ferromagnetic cup 15 and the rotor core laminations are fitted over the clamp tool 16. The tool is then actuated in such a way that, due to the rotor elasticity, between the laminations and the cup there are formed spaces just enough to allows the insertion of the magnets.

Thanks to the narrowness of the spaces and to the separation edges 11, the magnets cannot be displaced by their mutual magnetic actractive forces and can be assembled togheter in the magnetized condition.

After completing the magnets assembling, the second cup 13 is placed over the assembly and the clamp is released. Due to the structure elasticity, the rotor laminations will apply a large outward pressure over all the magnets, thus blocking them against the cups, at the same time compensating for their manufacturing tolerances. According to an alternative mounting technique, the rotor core is realized just small enough to allow for the easy assembly of the magnets; the outward pressure required by the fixation is obtained expanding the plastic structure permanently by pressing elastic fins in the cavities 4.

In order to ensure a stable contact of the magnets, it is preferred that the resting surface of rotor 9 is shaped according to the profile shown in Fig 1, that ensures an inner point of contact and two outer points of contact to each magnet. The rotor design can further include seats for possible rivets 10, as well as for other packaging means such as welding, cleating or interlocking; it is further possible to locate the magnets at angles that are progressively offset with respect to the geometrical division of the poles, in order to minimize the spurious torques originated by their coupling with the stator slots, The design can further include reference slots to package two or more modules 12, in case offset with respect to the central axis of the elementary module, for the above mentioned reasons. Although the invention has been disclosed with reference to a preferred embodiment, the same is not to be limited to such example, but the scope thereof extends to all the

changes, modifications or simplifications that will be apparent to the skilled in the art, such as a different number of poles or magnets, the application to synchronous generators, a different shape or position of the recesses imparting the elasticity, of the control recesses, the use of a different number of cups or of a tube.

## Claims

1. Multipolar magnetic structure, particularly for rotors of permanent magnets electric machines, both synchronous motors and generators, characterized in that it comprises a permanent magnets assembly supplying the magnetic flux, a laminations core of ferromagnetic material closing the magnetic path between the poles, and one or more thin cups or rings of a material that is non ferromagnetic, wherein the laminations core provides for a set of notches such as to render the structure radially resilient, in an independent manner for each magnet, so that the magnets are clamped between the laminations core, this latter applying a radial force directed outwardly of each magnet, and the outer holding cup or ring having a diameter adapted to compress the resilient structure, so that the resulting force is enough for binding the magnets to the structure.

2. A magnetic structure as claimed in claim 1, characterized in that the rotor elasticity is obtained by cutting out from the lamination sheet an area below the center of each pole (5), and by dividing into two portions the surface of contact of each pole by means of a cut (8) in correspondence of the center of the pole itself.

3. A magnetic structure as claimed in claims 1 and 2, characterized in that additional rotor elasticity is obtained by means of cuts (4) extending along an arc of circle having an angular extension just less than the extension of the polar arc, in the area of the rotor lamination between the motor shaft and the rest of the inter-pole gaps.

4. A magnetic structure as claimed in claims 1, 2 3, in which the rotor core is just small enough to allow for the free assembly of the magnetized magnets, and wherein the firm blocking of the magnets is obtained by expanding thr rotor core after the assembly by insering elastic fins in the elastic cavities (4).

5. A magnetic structure as claimed in claim 1, characterized in that the elastic laminations core is not engaged on the motor shaft, such function being accomplished by the holding cups prolonging outside the rotor until they meet the motor shaft.

6. A magnetic structure as claimed in claim 1, characterized in that in the lamination core there are formed teeth or steps (11) for precisely locating the angular position of the magnets.

7. A magnetic structure as claimed in claim 5, characterized in that said teeth locating; the angular position of the magnets are disposed at angles that are different from the pole pitch, and distributed at angles equal to the pole pitch plus or minus (±) an integer fraction of the slot pitch, in order to minimize oscillations of the magnetic retention torque.

8. A magnetic structure as claimed in claim 1, characterized in that in the laminations core there are formed alignement recesses (12) slightly offset with respect to the axis of simmetry thereof, thus allowing for a small angular offset assembling of the rotor segments to prevent oscillations of the magnetic retention torque.

9. A magnetic structure as claimed in claim 1, characterized in that in the area of the laminations core that has been rendered resilient there are formed axial recesses (5) allowing for the radial contraction of the resting surfaces of the magnets by means of a tool exerciting a pressure inside said recesses.

10. A method for assembling a rotor having a magnetic structure as claimed in claims 1 to 9, wherein a mounting tool (16) or equipment is used to contract the laninations core, outside of which a holding cup or ring (13) has previously been placed; so that thanks to the contraction of the core laminations the magnets can be introduced into the radial recesses existing between the laminations core contracted by the tool, and the cup, in case said magnets being already magnetized, after such introduction the structure being completed, if necessary, by additional cups or rings, and the tool is released so that the elasticity of the module causes the firm blocking of the structure.

*Fig. 1*

*Fig. 2*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN vol. 10, no. 272 (E-437)(2328) 16 September 1986, & JP-A-61 094548 (FANUC LTD.) 13 May 1986, * the whole document * | 1, 2 | H02K1/27 |
| A | PATENT ABSTRACTS OF JAPAN vol. 6, no. 182 (E-131)(1060) 18 September 1982, & JP-A-57 097354 (HITACHI SEISAKUSHO K.K.) 17 June 1982, * the whole document * | 1 | |
| P,A | FR-A-2641139 (R.BOSCH) * page 11, lines 32 - 35; figure 1 * | 1 | |
| A | PATENT ABSTRACTS OF JAPAN vol. 12, no. 287 (E-643)(3134) 05 August 1988, & JP-A-63 064556 (TOSHIBA CORP.) 23 March 1988, * the whole document * | 6 | |
| | | | TECHNICAL FIELDS SEARCHED (Int. Cl.5 ) |
| | | | H02K |

The present search report has been drawn up for all claims

| Place of search | Date of completion of the search | Examiner |
|---|---|---|
| BERLIN | 04 DECEMBER 1990 | LEOUFFRE, M |